# EUROPÄISCHE PATENTSCHRIFT

(11) **EP 0 635 304 B1**
(45) Veröffentlichungstag und Bekanntmachung des Hinweises auf die Patenterteilung: **01.04.1998**
(21) Anmeldenummer: 94100318.8
(22) Anmeldetag: 12.01.1994
(51) Int. Cl.: B01J 49/00, A47L 15/42, C02F 1/42

(54) **Blitzenhärter**
Flashsoftener
Adoucisseur éclair

(30) Priorität: 23.07.1993 DE 9311020 U
(43) Veröffentlichungstag der Anmeldung: 25.01.1995
(73) Patentinhaber: Judo Wasseraufbereitung GmbH, D-71364 Winnenden (DE)
(72) Erfinder: Schuler, Hansjörg, D-71522 Backnang (DE); Söcknick, Ralf, Dr., D-70806 Kornwestheim (DE); Stallmann, Peter, D-71522 Backnang (DE)
(74) Vertreter: KOHLER SCHMID + PARTNER

(56) Entgegenhaltungen:
- EP-A- 0 219 704
- DE-A- 2 630 164
- DE-A- 2 655 374
- DE-A- 3 015 727
- DE-C- 4 131 792
- FR-A- 2 408 337
- US-A- 3 414 130

## Beschreibung

Die Erfindung betrifft eine Wasserenthärtungsanlage mit einem Ionenaustauschermaterial, vorzugsweise Ionenaustauscherharz enthaltenden Ionenaustauscherbehälter und mit einer Regeneriereinrichtung zur automatischen Regenerierung des Ionenaustauschermaterials nach jeder Entnahme von enthärtetem Wasser aus dem Ionenaustauscherbehälter, die ein Gefäß mit konzentriertem Regeneriermittel, insbesondere Salz bzw. Salzsole, ein Leitungssystem zur Zuführung von Wasser zum Regeneriermittelgefäß und zum Abführen von Regeneriermittellösung aus dem Regeneriermittelgefäß in den Ionenaustauscherbehälter, das ein Ventil zur Verhinderung einer Rückströmung von Flüssigkeit entgegen der Hauptstromrichtung im Leitungssystem enthält, sowie eine Zylinderkammer mit einem federbelasteten Hubkolben und einem variablen Zylinderkammervolumen aufweist, wobei die Zylinderkammer so im Leitungssystem angeordnet ist, daß mit Hilfe des Hubkolbenhubes des Hubkolbens einerseits eine gewisse Flüssigkeitsmenge, die dem geförderten Volumen der Regeneriermittellösung entspricht, abgemessen und gefördert werden kann, andererseits den Betriebsablauf der Wasserenthärtungsanlage steuernde Ventile über eine mit dem Hubkolben verbundene Hubkolbenstange betätigt werden können.

Ein derartiger automatischer Wasserenthärter ist bekannt aus der DE 26 44 759 A1.

Wasserenthärtungsanlagen auf Ionenaustauscherbasis müssen nach der Erschöpfung des Ionenaustauscherharzes regeneriert werden. Diese Regeneration erfolgt in der Regel zeitabhängig oder in Abhängigkeit vom behandelten Wasservolumen. Für bestimmte Anwendungsfälle (z. B. Geschirrspülmaschinen) ist es jedoch möglich, die Regnerationsauslösung mit der Wasserentnahme zwingend zu koppeln und somit je Produktwasserentnahme einmal zu regenerieren.

In der DE 33 23 493 A1 ist eine Vorrichtung beschrieben, mit deren Hilfe die Regeneriermittelmenge in Abhängigkeit von der beim jeweiligen Entnahmezyklus behandelten Wassermenge bestimmt wird. Wird bei jeder Wasserentnahme das gleiche Wasservolumen behandelt, so kann die Regeneriermittelmenge für jede Regeneration konstant gehalten werden.

In der DE 26 55 374 A1 ist eine Vorrichtung zur Abmessung des Regeneriermittels mit Hilfe eines Systems beschrieben, das eine Hubkolbenanordnung enthält, welche mit dem Leitungsdruck das abgemessene Nachspeisewasservolumen in den Salz/Solevorratsbehälter dosiert, wodurch eine volumengleiche Regeneriermittelmenge aus dem Salz/Solevorratsbehälter in den Ionenaustauscherbehälter gedrückt wird.

In der oben genannten DE 26 44 759 A1 ist eine wasserdruckgesteuerte Enthärtungsanlage beschrieben, bei der das Nachspeisewasservolumen mit Hilfe eines Hubkolbensystems, das gleichzeitig eine Ventilsteuerfunktion wahrnimmt, abgemessen wird. Dieses Nachspeisewasservolumen wird mittels Federkraft in den Salz/Solebehälter dosiert, wodurch eine volumengleiche Regeneriermittelmenge aus dem Salz/Solebehälter dem zu regenerierenden Ionenaustauscherharz zudosiert wird.

Insbesondere bei den beiden in DE 26 55 374 A1 und DE 26 44 759 A1 beschriebenen Vorrichtungen, bei denen eine genaue Regneriermitteldosierung ermöglicht wird, gelangt das Regeneriermittel als hochkonzentrierte (in der Regel sogar als gesättigte) Salzlösung in den das Ionenaustauschermaterial enthaltenden Behälter. Erst dort wird es dann, unter Umständen sogar erst nach längerer Stagnation im unteren Bereich des Harzbettes vom nachströmenden Auswaschwasser verdünnt und durch das Harzbett transportiert.

Die Dichteunterschiede zwischen der Sole und dem Auswaschwasser führen bei einer Besalzung von unten nach oben zu einer ungleichmäßigen Verdünnung des Regeneriermittels, zu einer Rückvermischung in Strömungsrichtung und damit zu einer Verunreinigung des Regeneriermittels mit ausgetauschten Kalziumionen. Die Folgen hiervon sind eine schlechtere Ausnutzung des Regeneriermittels, ein höherer Salzbedarf je Regeneration und damit ein häufigeres Nachfüllen des Salz/Solevorratsbehälters mit festem Regeneriersalz sowie nicht zuletzt eine erheblich höhere Umweltbelastung. Eine Besalzung von oben nach unten wäre noch ungünstiger, da die konzentrierte Sole durch das Harzbett hindurchsacken würde und somit kaum zur Regeneration des erschöpften Ionenaustauschermaterials benutzt werden könnte.

Natürlich könnte man soviel konzentrierte Regeneriermittellösung einsetzen, daß das Porenvolumen des Ionenaustauschermaterials sowie gegebenenfalls das Totvolumen des Ionenaustauscherbehälters damit gefüllt wird. Da die für eine gute Regeneration erforderliche Regeneriermittelmenge jedoch nur ein Bruchteil derjenigen Menge ist, die in einer dem oben genannten Porenvolumen entsprechenden Menge an konzentrierter Regeneriermittelsole enthalten ist, wäre diese Vorgehensweise sehr unökonomisch und stark umweltbelastend.

Aufgabe der vorliegenden Erfindung ist es demgegenüber, eine Wasserenthärtungsanlage der eingangs genannten Art zu schaffen, bei der die erforderliche Enthärtungskapazität des Ionenaustauschermaterials mit einem Minimum an eingesetztem Regeneriermittel freigesetzt werden kann, wobei eine ausreichende, gleichmäßige Regeneration des Ionenaustauschermaterials sichergestellt ist.

Erfindungsgemäß wird diese Aufgabe, dadurch gelöst, daß das nutzbare Hubvolumen bei Verschiebung des Hubkolbens in der Zylinderkammer von einer Extremstellung in die andere größer oder mindestens gleich dem Hohlraumvolumen des Ionenaustauschermaterials einschließlich des im Ionenaustauscherbehälter in Strömungsrichtung vor dem Ionenaustauschermaterial befindlichen Totvolumens ist, und daß in der Regeneriereinrichtung eine Vorrichtung zur automatischen, definierten Verdünnung der aus dem Regeneriermittelgefäß in den Ionenaustauscherbehälter geförderten Regeneriermittellösung vorgesehen ist.

Durch die vorliegende Erfindung werden die oben genannten Probleme ebenso überraschend einfach wie kostengünstig beseitigt, indem mit Hilfe eines Hubkolbensystems nicht nur das Nachspeisewasservolumen für die konzentrierte Regeneriermittelmenge abgemessen wird, sondern gleichzeitig eine entsprechende Menge an Verdünnungswasser. Ziel hierbei ist es, das Regeneriermittelvolumen zu vergrößern, wodurch eine gleichmäßigere Verteilung des Regeneriermittelsalzes über dem Querschnitt des Ionenaustauscherbehälters erreicht wird, ebenso wie ein gleichmäßiges kontinuierliches Füllen des gesamten Ionenaustauscherbehälters mit Regeneriermittel, wodurch die gegen - in der Regel - Natriumionen ausgetauschten Kalziumionen mit der mehr und mehr verbrauchten Regeneriermittellösung zum Harzbehälterauslaß transportiert werden. Das Auswaschwasser hat bezüglich dieses vorverdünnten Regeneriermittels nur eine geringfügig kleinere Dichte, so daß die Rückvermischung weitgehend vermieden wird.

Das Volumen des verdünnten Regeneriermittels sollte dabei mindestens so groß wie das Hohlraumvolumen des Ionenaustauscherharzes sowie des in Strömungsrichtung vor dem Harzbett befindlichen Totvolumens des Austauscherbehälters sein, damit das Harz vollständig mit Regeneriermittel in Kontakt kommt, schon bevor das Auswaschwasser die Regeneriermittellösung wieder aus dem Austauschbehälter verdrängt.

Besonders vorteilhaft ist jedoch eine Ausführungsform der erfindungsgemäßen Wasserenthärtungsanlage, bei der das nutzbare Hubvolumen größer oder gleich dem Hohlraumvolumen des Ionenaustauschermaterials einschließlich der unterhalb und oberhalb des Ionenaustauschermaterials im Ionenaustauscherbehälter befindlichen Totvolumina ist. Dadurch erhält man ein Regeneriermittelvolumen (jeweils immer bei konstanter Wirkstoffmenge), das größer ist als das Hohlraumvolumen des Harzes sowie das Totvolumen des Austauscherbehälters, so daß beim Besalzen die vorderste Regeneriermittelfront mit der zwangsläufig größten Verunreinigung durch bereits ausgetauschte Ca²⁺-Ionen bereits wieder aus dem Austauscherbehälter verdrängt wurde, bevor die Besalzung beendet ist.

Bei einer bevorzugten Ausführung ist vorgesehen, daß mit der Hubkolbenstange auch mindestens ein Absperrventil im Leitungssystem zum Abführen von Regeneriermittel aus dem Regeneriermittelgefäß in den Ionenaustauscherbehälter betätigt werden kann. Dadurch kann beispielsweise im Zulauf zum Regeneriermittelgefäß ein Rückschlagventil, das insbesondere bei Kleinenthärtungsanlagen technisch aufwendig und zudem störanfällig ist, eingespart werden. Da mit der Hubkolbenstange ohnehin schon Betriebsventile im Ableitungssystem aus dem Ionenaustauscherbehälter angesteuert werden müssen, ist die zusätzliche Installation einer weiteren Ventilansteuerung im Bereich der Regeneriereinrichtung kaum mit zusätzlichem Aufwand verbunden.

Bei einer besonders einfachen Ausführungsform der Erfindung ist vorgesehen, daß die Vorrichtung zur automatischen, definierten Verdünnung des aus dem Regeneriermittelgefäß geförderten Regeneriermittels eine im Zuleitungssystem zum Regeneriermittelgefäß vorgesehene Verzweigung umfaßt, von der einerseits ein in das Regeneriermittelgefäß mündender Leitungsabschnitt, andererseits eine am Regeneriermittelgefäß vorbeigeführte Bypassleitung abzweigt, die an ihrem anderen Ende in einer Verschneidungstelle mit einem Leitungsabschnitt des Ableitungssystems aus dem Regeneriermittelgefäß zusammentrifft.

Um das Mischungsverhältnis von Regeneriermittel und Wasser in der Regeneriermittellösung auf einfache Weise regulieren zu können, ist bei einer vorteilhaften Weiterbildung im Zuleitungssystem zum Regeneriermittelgefäß mindestens ein Drosselorgan mit veränderbarem Durchflußquerschnitt vorgesehen. Dadurch kann die durch das Regeneriermittelgefäß fließende Wassermenge im Verhältnis zu der durch die Bypassleitung fließenden Wassermenge eingestellt werden.

Besonders günstig ist eine Anordnung des einstellbaren Drosselorgans in dem Leitungsabschnitt zwischen der Verzweigung und dem Regeneriermittelgefäß bzw. zwischen dem Regeneriermittelgefäß und der Verschneidungsstelle. Zur Einstellung des Mischungsverhältnisses der Regeneriermittellösung könnte das einstellbare Drosselorgan aber auch in der Bypassleitung vorgesehen sein. Dadurch kann jeweils auf einfache Weise auf regional unterschiedliche Wasserhärten reagiert werden, um eventuell Regeneriermittel einzusparen.

Vorzugsweise ist in der Bypassleitung eine Drosselstelle mit fest vorgegebenem Querschnitt vorgesehen, die in Zusammenwirken mit dem variablen Querschnitt des einstellbaren Drosselorgans in dem zum Regeneriermittelgefäß führenden Leitungsabschnitt die Durchflußmenge an Regeneriermittellösung definiert.

Bei einer besonders bevorzugten Ausführungsform der erfindungsgemäßen Wasserenthärtungsanlage ist das nutzbare Hubvolumen in der Zylinderkammer einstellbar, insbesondere durch eine einstellbare Hubwegbegrenzung des Hubkolbens. Auch mit dieser Ausführungsform kann auf einfache Weise auf regional unterschiedliche Wasserhärten optimal reagiert werden.

Bei einer speziellen Ausführungsform der Erfindung ist die Zylinderkammer mit dem Ableitungssystem aus dem Regeneriermittelgefäß über einen Leitungsabschnitt verbunden. Dadurch kann das Hubkolben/Zylindersystem mit der für die Regeneration erforderlichen Menge an Regeneriermittellösung gefüllt werden, indem ein Teilstrom des Nachspeisewassers durch den Salz/Solebehälter und ein zweiter Teilstrom im Bypass zum Salz/Solebehälter dem Hubkolben/Zylindersystem zugeführt wird.

Vorteilhaft bei dieser Ausführungsform ist eine Variante, bei der im Leitungsabschnitt zwischen der Einmündung des zur Zylinderkammer führenden Leitungsabschnittes und dem Einlauf in den Ionenaustauscherbehälter eine Drosselstelle mit einem definierten, engen Strömungsquerschnitt vorgesehen ist. Diese Drosselstelle definiert die Zeitdauer der Besalzung des Ionenaustauscherharzes.

Bei einer anderen Ausführungsform der erfindungsgemäßen Wasserenthärtungsanlage ist die Zylinderkammer über einen Leitungsabschnitt mit dem Zuleitungssystem zum Regeneriermittelgefäß verbunden. Das Hubkolben/Zylindersystem wird bei dieser Ausführungsform mit einer dem verdünnten Regeneriermittelvolumen entsprechenden Menge an Wasser gefüllt, und dieses Wasser wird beim Besalzungsvorgang teilweise durch den Salz/Solebehälter und teilweise im Bypass an diesem vorbei sowie nach Vermischung dieser beiden Teilströme dem zu regenerierenden Ionenaustauschermaterial zugeführt. Ein Vorteil dieser Ausführungsform besteht darin, daß in der Zylinderkammer lediglich Rohwasser, nicht jedoch korrosives Salzwasser bevorratet wird, was zu einer Schonung und längeren Haltbarkeit der Zylinderkammer und des Hubkolbensystems beiträgt.

Bei einer vorteilhaften Variante dieser Ausführungsform mündet der mit der Zylinderkammer verbundene Leitungsabschnitt in Strömungsrichtung gesehen vor der Verzweigung zwischen der Zuführungsleitung zum Regeneriermittelgefäß und der Bypassleitung in das Zuleitungssystem zum Regeneriermittelgefäß.

Besonders empfehlenwert ist eine Weiterbildung dieser Ausführungsform, bei der in Strömungsrichtung gesehen vor der Einmündung des mit der Zylinderkammer verbundenen Leitungsabschnittes im Zuleitungssystem zum Regeneriermittelgefäß ein Rückschlagventil mit definierter, kleiner Undichtheit vorgesehen ist, welche bei beginnender Entspannung der den Hubkolben treibenden Feder dem Zylinderraum eine leichte Druckentlastung gewährt.

Bei einer Ausführungsform der Erfindung zweigt sich die Rohwasserleitung zur Anlage in einen Harzbehälterzulauf sowie einen Zulauf zum Regeneriermittelbehälter und eine Verbindungsleitung zur Zylinderkammer auf.

Einer weiteren Ausführungsform ist in Strömungsrichtung sowohl vor als auch nach dem Regeneriermittelbehälter ein Rückschlagventil vorgesehen.

Einfacher und damit kostensparender ist eine Ausführungsform, bei der die Anlage nur ein Rückschlagventil aufweist, das vorzugsweise dem Regeneriermittelbehälter vorgeschaltet ist.

Bei einer weiteren Ausführungsform ist eine Leitung vorgesehen, die sowohl Verdünnungswasser zur Zylinderkammer leitet, als auch verdünnte Regeneriermittellösung zum Ionenaustauscherbehälter.

Bei einer besonders bevorzugten Ausführungsform ist im Hubkolben eine Längsbohrung vorgesehen, durch welche konzentrierte Regeneriermittellösung in das Zylinderkammervolumen geleitet wird. Damit kann die Anlage wesentlich kompakter gestaltet werden.

Bei einer weiteren bevorzugten Ausführungsform ist vorgesehen, daß zwei oder mehr auf dem Hubkolben fixierte Dichtungsringe die Verbindung oder Trennung von Leitungen herstellen, und zwar in Abhängigkeit von der Position, die der Hubkolben in der Zylinderkammer bedingt durch den Füllungsgrad des Zylinderkammervolumens einnimmt.

Alternativ dazu ist bei einer einfacheren Ausführungsform vorgesehen, daß die Vermischung der konzentrierten Regeniermittelsole und des Verdünnungswassers an einer Verschneidungsstelle erfolgt, und diese sich direkt vor dem Zulauf zu dem Zylinderkammervolumen oder im Zylinderkammervolumen befindet.

Eine vorteilhafte Weiterbildung dieser Ausführungsform sieht vor, daß lediglich ein auf dem Hubkolben fixierter Dichtungsring vorgesehen ist, der die Verbindung oder Trennung von Leitungen herstellt, und zwar in Abhängigkeit von der Position, die der Hubkolben 7 in der Zylinderkammer bedingt durch den Füllungsgrad des Zylinderkammervolumens einnimmt.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln, für sich oder zu mehreren in beliebigen Kombinationen Anwendung finden. Es zeigen:
- Fig. 1: ein schematisches Blockschaltbild einer Ausführungsform der erfindungsgemäßen Wasserenthärtungsanlage gemäß Beispiel 1;
- Fig. 2: ein schematisches Blockschaltbild einer Ausführungsform gemäß Beispiel 2;
- Fig. 3: ein schematisches Blockschaltbild einer Ausführungsform gemäß Beispiel 4;
- Fig. 4a-c: schematische Blockschaltbilder einer Ausführungsform gemäß Beispiel 4 mit verschiedenen Stellungen des Hubkolbens;
- Fig. 5: ein schematisches Blockschaltbild einer Ausführungsform gemäß Beispiel 5; und
- Fig. 6a-c: schematische Blockschaltbilder von Ausführungsformen gemäß Beispiel 5 mit unterschiedlichen Hubkolbenpositionen.

### Beispiel 1:

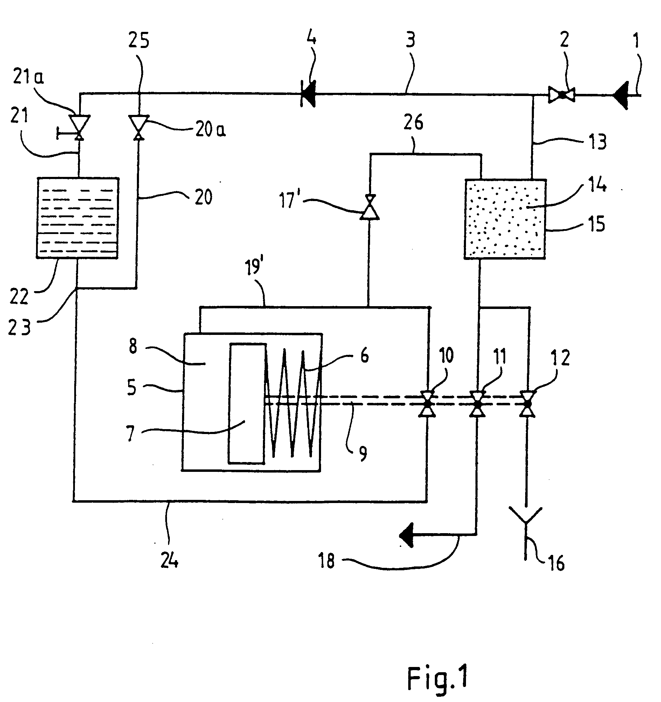

Eine vorteilhafte Ausführungsform der automatischen Wasserenthärtungsanlage ist in Fig. 1 dargestellt. Soll das in einer Leitung 1 anstehende Rohwasser enthärtet werden, wird ein Magnetventil 2 geöffnet. Das Wasser strömt über einen Leitungsabschnitt 3 und ein Rückschlagventil 4 zu einer Verzweigung 25. Dort teilt sich der Volumenstrom auf und fließt über einen Leitungsabschnitt 21 mit einer einstellbaren Drossel 21a, mit deren Hilfe dieser Teilstrom festgelegt wird, in ein Regeneriermittelgefäß 22 mit Salz bzw. Salzsole. Der zweite Teilstrom fließt über eine Bypassleitung 20 (gegebenenfalls mit einer Drosselstelle 20a) zu einer Verschneidungsstelle 23, an der die durch den ersten Teilstrom aus dem Salz/Solebehälter verdrängte, zumindest näherungsweise gesättigte Sole mit dem durch die Bypassleitung 20 strömenden Wasser zur Regeneriermittellösung verdünnt wird.

Diese Regeneriermittellösung strömt über einen Leitungsabschnitt 24 und ein Ventil 10 in eine Zylinderkammer 5 ein, wodurch sich das Zylinderkammervolumen 8 in der Zylinderkammer 5 vergrößert, da ein Hubkolben 7 gegen die Kraft einer Feder 6 nach rechts gedrückt wird. Hierbei betätigt eine Hubkolbenstange 9 Ventile 10, 11 und 12.

Die fertig verdünnte Regeneriermittellösung wird hergestellt und in der Zylinderkammer 5 zwischengespeichert, während gleichzeitig die Regeneriermittelreste der vorherigen Regeneration mit Rohwasser über einen Leitungsabschnitt 13 aus dem in einem Ionenaustauscherbehälter 15 befindlichen Ionenaustauschermaterial 14 ausgespült und über das Ventil 12 dem Kanal 16 zugeführt werden.

Hat der Hubkolben 7 seine rechte Endlage erreicht, so wird das Ventil 11 geöffnet und die Ventile 10 und 12 werden geschlossen. Nun strömt über den Leitungsabschnitt 13 Rohwasser durch den Ionenaustauscherbehälter 15, dort wird es enthärtet und über das Ventil 11 und eine Leitung 18 dem Verbraucher zugeführt.

Nach beendeter Wasserentnahme durch den Verbraucher wird das Ventil 2 geschlossen, der Druck in der Zylinderkammer 5 sinkt und die Feder 6 drückt den Hubkolben 7 in die Richtung seiner linken Endposition. Hierbei wird das Ventil 11 geschlossen und das Ventil 12 sowie das Ventil 10 geöffnet. Die Regeneriermittellösung wird durch den federgetriebenen Hubkolben 7 aus dem Zylinderkammervolumen 8 verdrängt und über einen Leitungsabschnitt 19' und einen weiteren Leitungsabschnitt 26 mit einer Drosselstelle 17' dem Ionenaustauscherbehälter 15 zugeführt.

Durch die oben beschriebene Verdünnung erreicht man, daß das gesamte Hohlraumvolumen des Ionenaustauschermaterials mit Regeneriermittel ausgefüllt wird. Das Regeneriermittel bleibt dort bis zur nächsten Wasserentnahme durch den Verbraucher (Öffnen des Ventils 2). Das zu regenerierende Ionenaustauschermaterial kommt somit vollständig und über einen längeren Zeitraum mit dem Regeneriermittel in Kontakt.

Besonders günstig ist es jedoch, wenn das Volumen des verdünnten Regeneriermittels so groß ist, daß beim Entleeren des Zylinderkammervolumens 8, das heißt also beim Besalzen, die vorderste Regeneriermittelfront den Ionenaustauscherbehälter 15 bereits wieder verläßt und über das Ventil 12 in den Kanal 16 geleitet wird. Hierdurch wird erreicht, daß bereits in dieser Phase der Regeneration ein erheblicher Anteil der durch die Regeneration vom Harz entfernten Kalziumionen aus dem Behälter 15 ausgewaschen wird und somit diese Kalziumionen während der Standzeit des Regeneriermittels im Ionenaustauscherbehälter 15 nicht mehr durch Rückvermischung zu dessen Verunreinigung führen können. Hierdurch wird die Regeneriermittelausnutzung verbessert und damit der Regeneriermittelverbrauch deutlich reduziert.

Das Mischungsverhältnis zwischen der den Regeneriermittelbehälter 22 verlassenden konzentrierten Sole und dem durch die Bypassleitung 20 geleiteten Rohwasser, d. h. also die Konzentration der am Verschneidungspunkt 23 erzeugten verdünnten Regeneriermittellösung wird durch das Verhältnis der Drosselquerschnitte an der festen Drosselstelle 20a und der einstellbaren Drossel 21a bestimmt. Die Nachwaschzeit ergibt sich aus den absoluten Öffnungsquerschnitten der Drosseln 20a, 21a, während die Besalzungsdauer durch den Öffnungsquerschnitt der Drossel 17' definiert wird.

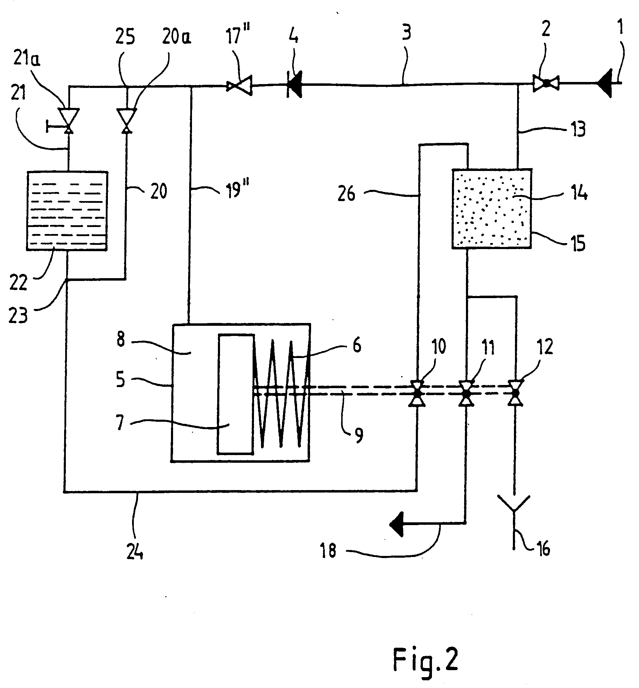

Die Regeneration des verbrauchten Ionenaustauscherharzes 14 sowie der Enthärtungsbetrieb des Rohwassers können im Ionenaustauscherbehälter 15 sowohl im Abstrom-Gleichstrom-, Aufstrom-Gleichstrom-, Abstrom-Gegenstrom- oder Aufstrom-Gegenstrom-Verfahren erfolgen. Die technisch einfachste Lösung ist der in Fig. 1 und 2 gezeigte Betrieb der Anlage im Abstrom-Gleichstrom-Verfahren. Vorteilhaft wegen einer besseren Regeneriermittelausnutzung ist der technisch aufwendigere Abstrom-Gegenstrom-Betrieb.

### Beispiel 2:

Eine weitere besonders vorteilhafte Ausführungsform ist in Fig. 2 dargestellt. Soll das in der Leitung 1 anstehende Rohwasser enthärtet werden, wird das Magnetventil 2 geöffnet. Das Wasser strömt über die Leitung 3, das Rückschlagventil 4 und die Drosselstelle 17'' in die Zylinderkammer 5 ein. Hierbei wird der von der Feder 6 belastete Hubkolben 7 entgegen der Federkraft gedrückt. Das Zylinderkammervolumen 8 füllt sich mit Rohwasser und die Hubkolbenstange 9 betätigt die Ventile 10, 11 und 12 in Abhängigkeit von der Position des Hubkolbens 7 im Zylinder 5.

Während sich der Hubkolben 7 in seine rechte Endlage bewegt, ist das Ventil 12 geöffnet und die Ventile 10 und 11 sind geschlossen. Daher kann gleichzeitig Auswaschwasser über den Leitungsabschnitt 13 zu dem mit Ionenaustauscherharz 14 befüllten Ionenaustauscherbehälter 15 fließen und durch diesen hindurch zum Abwasserkanal 16, wobei das während der vorhergehenden Regeneration eingebrachte Regeneriermittel ausgewaschen wird.

Nähert sich der Hubkolben 7 seiner rechten Endposition, dann wird das Ventil 12 geschlossen und das Ventil 11 geöffnet, so daß über die Leitung 18 enthärtetes Wasser zum Verbraucher fließen kann. Nach beendeter Wasserentnahme durch den Verbraucher wird das Ventil 2 geschlossen.

Da in der Ausführungsform nach Beispiel 2 das Rückschlagventil 4 mit einer kleinen, definierten Undichtheit in Richtung auf den Leitungsabschnitt 3 versehen ist, sinkt der Druck im Zylinderkammervolumen 8 und die Feder 6 drückt den Hubkolben 7 in die Richtung seiner linken Endposition. Hierbei werden über die Hubkolbenstange 9 die Ventile 10 und 12 geöffnet und das Ventil 11 geschlossen.

Das Zylinderkammervolumen 8 entleert sich über den Leitungsabschnitt 19'', wobei sich der Volumenstrom an der Verzweigung 25 aufteilt in die Bypassleitung 20 (gegebenenfalls mit einer Drossel 20a versehen) sowie parallel hierzu über den Leitungsabschnitt 21 mit einer einstellbaren Drossel 21a in den Salz/Solebehälter 22. Aus dem Regeneriermittelgefäß 22 wird hierdurch eine volumengleiche Menge zumindest näherungsweise gesättigter Salzsole verdrängt. Das Volumen dieser Salzsole ist kleiner als das maximale Volumen der Zylinderkammer 5 und wird über die einstellbare Drossel 21a vorgewählt.

Die Sole mischt sich an der Verschneidungsstelle 23 mit dem restlichen aus der Zylinderkammer 5 herausgedrückten Wasservolumen, welches im Bypass 20 am Solebehälter 22 vorbeiströmt. Diese definiert verdünnte Sole stellt nun die Regeneriermittellösung dar, die über den Leitungsabschnitt 24 und das Ventil 10 dem Ionenaustauschermaterial 14 zugeführt wird.

Durch die Verdünnung erreicht man, daß das gesamte Hohlraumvolumen des Ionenaustauschermaterials 14 mit Regeneriermittel ausgefüllt wird. Das Regeneriermittel bleibt dort bis zur nächsten Wasserentnahme durch den Verbraucher (Öffnen des Ventils 2). Das zu regenerierende Ionenaustauschermaterial kommt somit vollständig und über einen längeren Zeitraum mit dem Regeneriermittel in Kontakt.

Besonders günstig ist es jedoch, wenn das Volumen des verdünnten Regeneriermittel so groß ist, daß beim Entleeren des Zylinderkammervolumens 8, das heißt also beim Besalzen, die vorderste Regeneriermittelfront den Ionenaustauscherbehälter 15 bereits wieder verläßt und über das Ventil 12 in den Abwasserkanal 16 geleitet wird. Hierdurch wird erreicht,daß bereits in dieser Phase der Regeneration ein erheblicher Anteil der durch die Regeneration vom Harz entfernten Kalziumionen aus dem Behälter 15 ausgewaschen wird und somit diese Kalziumionen während der Standzeit des Regeneriermittels im Ionenaustauscherbehälter 15 nicht mehr durch Rückvermischung zu dessen Verunreinigung führen können. Hierdurch wird die Regeneriermittelausnutzung verbessert und damit der Regeneriermittelverbrauch deutlich reduziert.

Der besondere Vorteil dieses zweiten Beispiels ist darin zu sehen, daß in der Zylinderkammer 5 nicht eine Salzlösung abgemessen und bis zur Besalzung zwischengespeichert wird, sondern lediglich ein salzarmes Rohwasser. Dies führt zu einer geringeren Materialbelastung sowie zur sicheren Vermeidung der Auskristallisation von Salzen bei eventuellen Undichtigkeiten im Hubkolben/Zylindersystem.

### Beispiel 3:

Um auf die regional unterschiedliche Wasserhärte reagieren zu können, besteht zum einen die Möglichkeit, das Hubvolumen des aus Zylinderkammer 5 und Hubkolben 7 bestehenden Systems z. B. durch eine einstellbare Hubwegbegrenzung zu variieren.

Eine weitere vorteilhafte Ausführungsform besteht darin, bei konstantem Hubvolumen den Teilstrom durch den Salz/Solebehälter 22 mit Hilfe des einstellbaren Drosselorgans 21a zu variieren und somit bei konstantem Regeneriermittelvolumen über die Regeneriermittelkonzentration auf die aktuelle örtliche Wasserhärte zu reagieren.

### Beispiel 4:

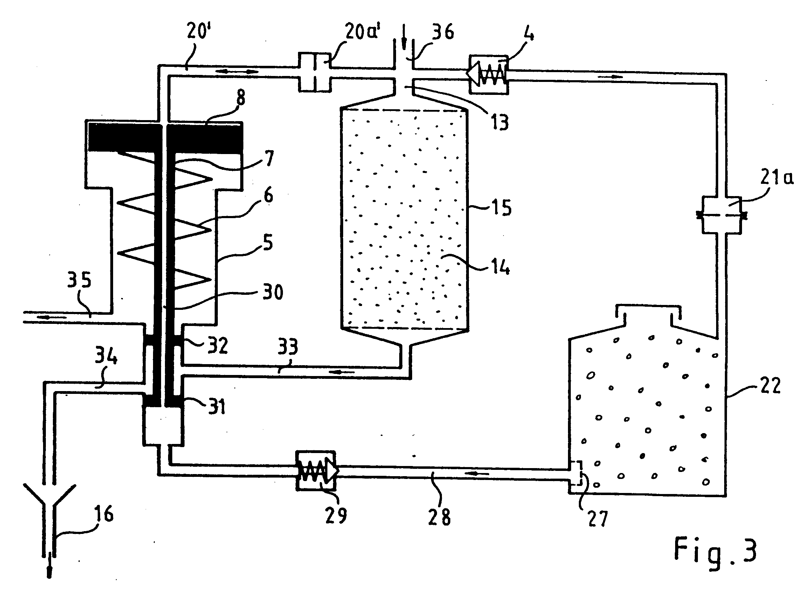

Eine weitere besonders vorteilhafte Ausführungsform ist in Fig. 3 dargestellt. Soll das in der in Fig. 1 und 2 dargestellten Leitung 1 anstehende Rohwasser enthärtet werden, wird das ebenfalls dort dargestellte Magnetventil 2 geöffnet. Das Wasser strömt dann über eine in Fig. 3 gezeigte Leitung 36, das Rückschlagventil 4 und die Drosselstelle 21a in das Regeneriermittelgefäß 22 mit Salz bzw. Salzsole. Während dieses Nachspeisewasser in das Regeneriermittelgefäß 22 einströmt, verdrängt es gleichzeitig konzentrierte Salzsole aus dem unteren Bereich des Regeneriermittelgefäßes.

Ein Sieb 27 bzw. eine ähnliche, geeignete Rückhaltevorrichtung verhindert, daß ungelöstes Regeneriersalz mitgerissen wird. Die konzentrierte Salzsole strömt über eine Leitung 28 und ein Rückschlagventil 29 in die Zylinderkammer 5 und dort über eine Bohrung 30 im Hubkolben 7 in das Zylinderkammervolumen 8. Gleichzeitig strömt Wasser über eine Drosselstelle 20a' und die Leitung 20' in das Zylinderkammervolumen 8. Hier verdünnt es die Regeneriersole auf die gewünschte Konzentration. Gleichzeitig wird der Hubkolben 7 gegen die Kraft der Feder 6 nach unten verdrängt, wodurch mit Hilfe der auf dem unteren Teil des Hubkolbens 7 fixierten Dichtungsringe 31 und 32 die Ventilfunktionen der in Fig. 1 und 2 gezeigten Ventile 11 und 12 realisiert werden. Die Dichtungsringe 31 und 32 können als O-Ringe, vorzugsweise als Lippendichtringe ausgeführt sein.

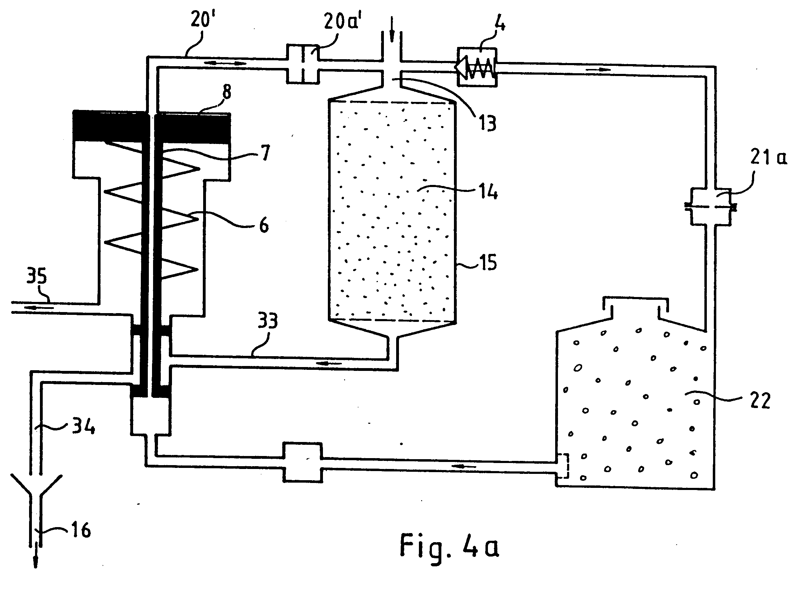

Es kann je nach Betriebsbedingungen alternativ auf eines der beiden Rückschlagventile 4 oder 29 verzichtet werden. Der Verzicht auf eines der Rückschlagventile führt zu einem Kostenvorteil bei der Herstellung dieser Anlage. Da es sich technisch kaum bemerkbar macht, wenn das Rückschlagventil 29 entfällt, wird die weitere Funktionsbeschreibung anhand der Fig. 4a - 4c, d.h. ohne das Rückschlagventil 29 durchgeführt.

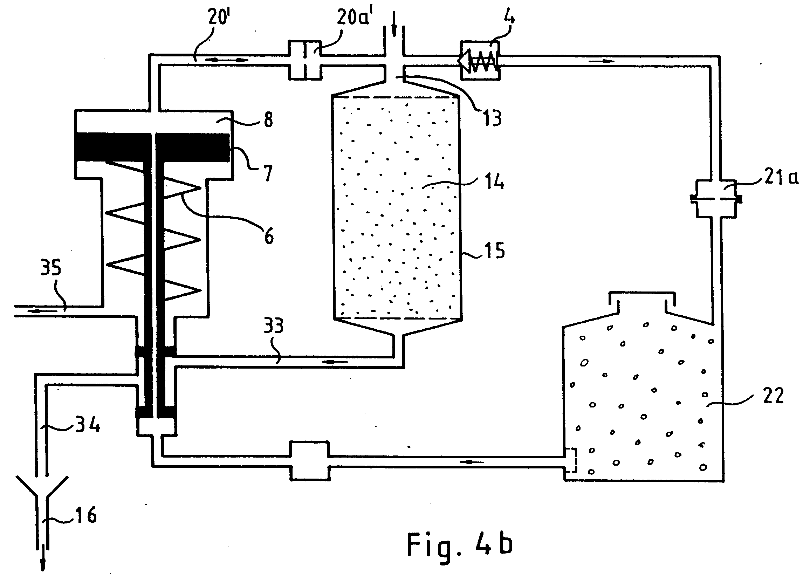

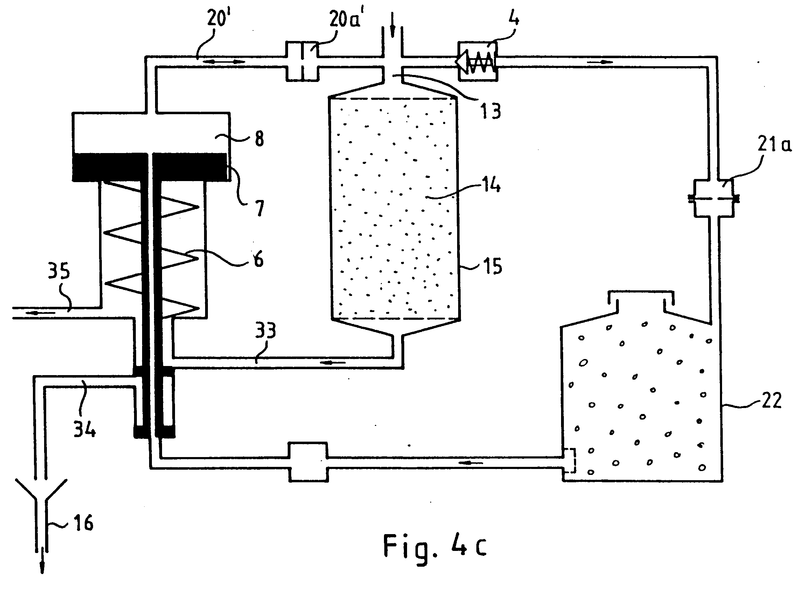

Die konzentrierte Regeneriermittelsole und das Verdünnungswasser strömen in das Zylinderkammervolumen 8 ein. Das Mischungsverhältnis zwischen konzentrierter Regeneriermittelsole und Verdünnungswasser wird vom Verhältnis der Durchflußwiderstände der Drosselstellen 20a und 21a zueinander bestimmt. Dieses Verhältnis läßt sich z.B. über austauschbare Blenden, Düsen etc. variieren. Zeitgleich fließt Wasser (Fig. 4a) über die Leitung 13 in den mit Ionenaustauscherharz 14 befüllten Ionenaustauscherbehälter 15. Hierdurch werden Regeneriermittelreste der vorherigen Regeneration aus dem Ionenaustauscherbehälter 15 ausgespült und über Leitungen 33 und 34 dem Kanal 16 zugeführt. Der nach unten wandernde Hubkolben 7 (siehe Fig. 4b) erreicht seine untere Endposition, wenn das Zylinderkammervolumen 8 die erforderliche Menge an verdünnter Regeneriermittellösung gespeichert hat. Gleichzeitig wird in dieser Position (Fig. 4c) die Verbindung zwischen der Leitung 33 und 34 unterbrochen und eine Verbindung zwischen der Leitung 33 und einer Leitung 35 hergestellt, die zum Verbraucher führt. Nun kann das zu behandelnde Rohwasser über die Leitung 13, das im Ionenaustauscherbehälter 15 befindliche Ionenaustauschermaterial 14 geleitet, also behandelt und über die Leitungen 33 und 35 dem Verbraucher zugeführt werden.

Nach beendeter Wasserentnahme durch den Verbraucher wird das (in Fig. 1 und 2 dargestellte) Magnetventil 2 geschlossen.

Der Druck im Zylinderkammervolumen 8 sinkt und die Feder 6 drückt den Hubkolben 7 in die Richtung seiner oberen Endposition. Hierbei wird die Verbindung zwischen den Leitungen 33 und 35 wieder unterbrochen und die Verbindung zwischen den Leitungen 33 und 34 hergestellt. Die Regeneriermittellösung wird durch den federkraftgetriebenen Hubkolben 7 aus dem Zylinderkammervolumen 8 verdrängt und über die Leitung 20' und die Drosselstelle 20a' dem Ionenaustauscherbehälter 15 zugeführt.

Die Besalzungsdauer ergibt sich aus der Federkraft der Feder 6 und dem Öffnungsquerschnitt der Drosselstelle 20a'. Die Zeit für das oben genannte Auswaschen des Ionenaustauschermaterials (Nachwaschzeit) ergibt sich aus den absoluten Öffnungsquerschnitten der Drosselstellen 20a' und 21a sowie der Federkraft.

Das Regeneriermittelvolumen ergibt sich durch das maximale Zylinderkammervolumen 8, und die Regeneriermittelkonzentration ergibt sich aus den Strömungswiderständen der Drosselstelle 21a und des Regeneriermittelbehälters 22 im Verhältnis zum Strömungswiderstand der Drosselstelle 20a'.

### Beispiel 5:

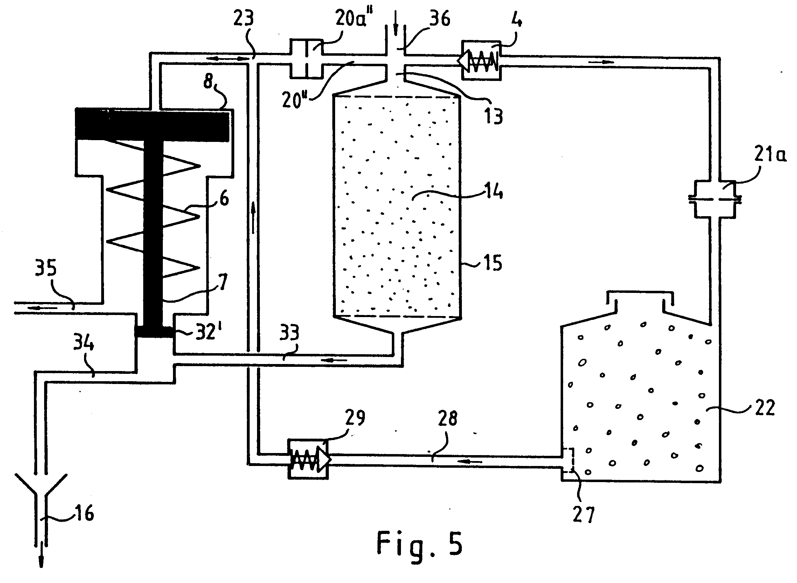

Eine ganz besonders vorteilhafte Ausführungsform ist in Fig. 5 dargestellt. Soll das in der in Fig. 1 und 2 dargestellten Leitung 1 anstehende Rohwasser enthärtet werden, wird das Magnetventil 2 geöffnet. Das Wasser strömt dann über die Leitung 36, das Rückschlagventil 4 und die Drosselstelle 21a in das Regeneriermittelgefäß 22 mit Salz bzw. Salzsole. Während dieses Nachspeisewasser in das Regeneriermittelgefäß 22 einströmt, verdrängt es gleichzeitig konzentrierte Salzsole aus dem unteren Bereich des Regeneriermittelgefäßes. Das Sieb 27 bzw. eine ähnliche geeignete Rückhaltevorrichtung verhindert, daß ungelöstes Regeneriersalz mitgerissen wird. Die konzentrierte Salzsole strömt über die Leitung 28 und das Rückschlagventil 29 zum Verschneidepunkt 23. Gleichzeitig fließt Wasser über eine Drosselstelle 20a'' und eine Leitung 20'' zum Verschneidepunkt 23. Die verdünnte Regeneriermittellösung strömt in das Zylinderkammervolumen 8. Hierdurch wird der Hubkolben 7 gegen die Kraft der Feder 6 nach unten verdrängt, wodurch mit Hilfe der auf dem unteren Teil des Hubkolbens 7 fixierten Dichtung 32' die Ventilfunktionen der in Fig. 1 und 2 gezeigten Ventile 11 und 12 realisiert werden.

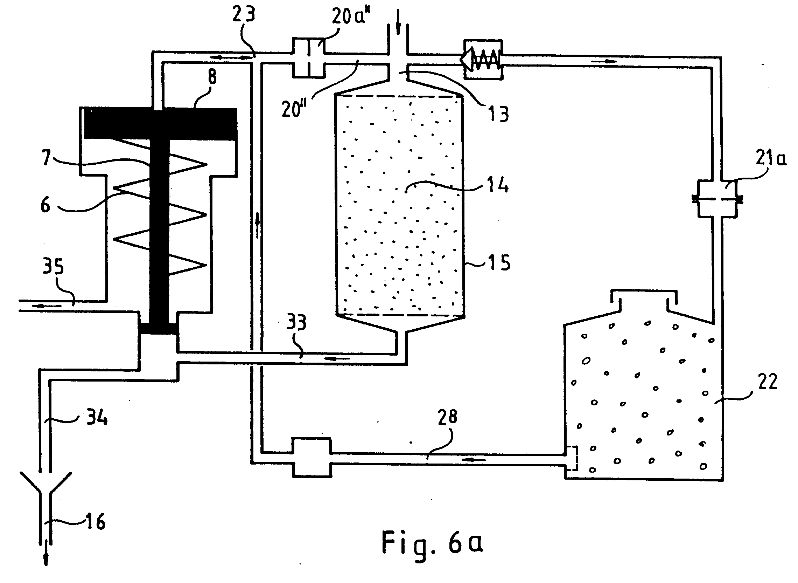

Es kann je nach Betriebsbedingungen alternativ auf eines der beiden Rückschlagventile 4 oder 29 verzichtet werden, was einen Kostenvorteil bei der Herstellung bedeutet. Da es sich technisch kaum bemerkbar macht, stellt die Anlage ohne das Rückschlagventil 29 daher eine besonders vorteilhafte Variante dar. Die weitere Funktionsbeschreibung wird daher anhand der Fig. 6a - 6c, d.h. ohne das Rückschlagventil 29 durchgeführt.

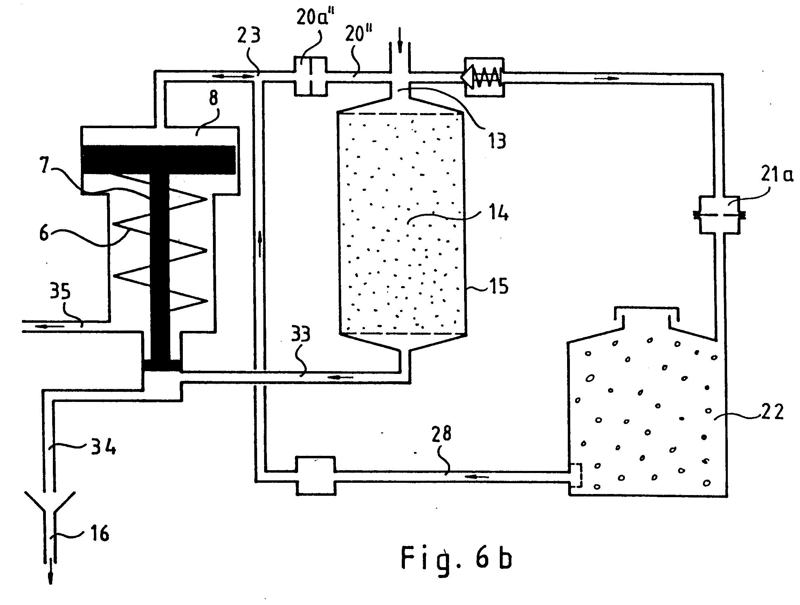

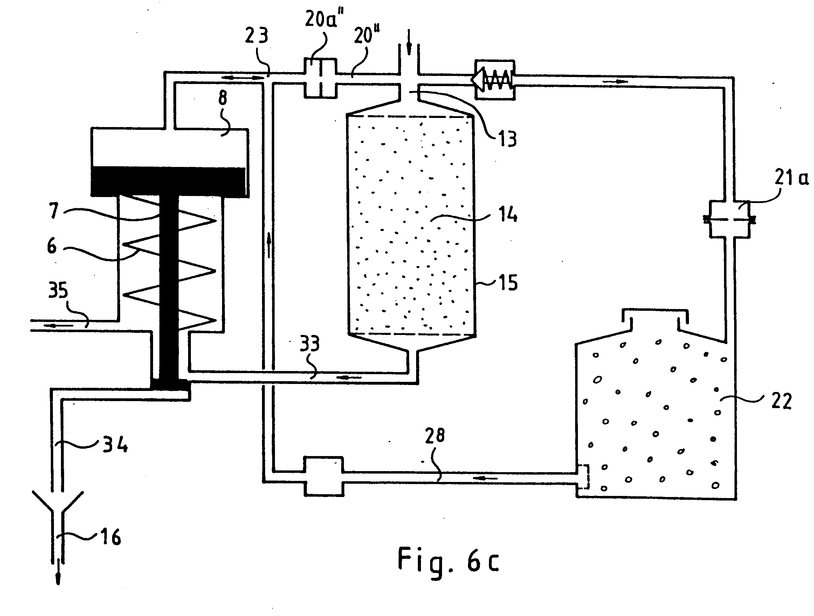

Die verdünnte Regeneriermittellösung strömt in das Zylinderkammervolumen 8 ein. Das Mischungsverhältnis zwischen konzentrierter Regeneriermittelsole und Verdünnungswasser wird vom Verhältnis der Durchflußwiderstände der Drosselstellen 20a'' und 21a zueinander bestimmt. Dieses Verhältnis läßt sich z.B. über austauschbare Blenden, Düsen etc. variieren. Zeitgleich fließt Wasser (Fig. 6a) über die Leitung 13 in den mit Ionenaustauscherharz 14 befüllten Ionenaustauscherbehälter 15. Hierdurch werden Regeneriermittelreste der vorherigen Regeneration aus dem Ionenaustauscherbehälter 15 ausgespült und über die Leitungen 33 und 34 dem Kanal 16 zugeführt. Der nach unten wandernde Hubkolben 7 (siehe Fig. 6b) erreicht seine untere Endposition, wenn das Zylinderkammervolumen 8 die erforderliche Menge an verdünnter Regeneriermittellösung gespeichert hat. Gleichzeitig wird in dieser Position (Fig. 6c) die Verbindung zwischen den Leitungen 33 und 34 unterbrochen und eine Verbindung zwischen den Leitungen 33 und 35 hergestellt. Letztere führt zum Verbraucher. Nun kann das zu behandelnde Rohwasser über die Leitung 13, das im Ionenaustauscherbehälter 15 befindliche Ionenaustauschermaterial 14 geleitet, also behandelt und über die Leitungen 33 und 35 dem Verbraucher zugeführt werden.

Nach beendeter Wasserentnahme durch den Verbraucher wird das (in Fig. 1 und 2 dargestellte) Magnetventil 2 geschlossen. Der Druck im Zylinderkammervolumen 8 sinkt, und die Feder 6 drückt den Hubkolben 7 in die Richtung seiner oberen Endposition. Hierbei wird die Verbindung zwischen den Leitungen 33 und 35 wieder unterbrochen und die Verbindung zwischen den Leitungen 33 und 34 hergestellt. Die Regeneriermittellösung wird durch den federkraftgetriebenen Hubkolben 7 aus dem Zylinderkammervolumen 8 verdrängt und über die Leitung 20'' und die Drosselstelle 20a'' dem Ionenaustauscherbehälter 15 zugeführt.

Die Besalzungsdauer ergibt sich aus der Federkraft der Feder 6 und dem Öffnungsquerschnitt der Drosselstelle 20a''. Die Zeit für das oben genannte Auswaschen des Ionenaustauschermaterials (Nachwaschzeit) ergibt sich aus den absoluten Öffnungsquerschnitten der Drosselstellen 20a'' und 21a sowie der Federkraft der Feder 6.

Das Regeneriermittelvolumen ergibt sich durch das maximale Zylinderkammervolumen 8, und die Regeneriermittelkonzentration ergibt sich aus den Strömungswiderständen der Drosselstelle 21a und des Regeneriermittelbehälters 22 im Verhältnis zum Strömungswiderstand der Drosselstelle 20a''.

## Patentansprüche

1. Wasserenthärtungsanlage mit einem Ionenaustauschermaterial (14), vorzugsweise Ionenaustauscherharz enthaltenden Ionenaustauscherbehälter (15) und mit einer Regeneriereinrichtung zur automatischen Regenerierung des Ionenaustauschermaterials (14) nach jeder Entnahme von enthärtetem Wasser aus dem Ionenaustauscherbehälter (15), die ein Gefäß (22) mit konzentriertem Regeneriermittel, insbesondere Salz bzw. Salzsole, ein Leitungssystem zur Zuführung von Wasser zum Regeneriermittelgefäß (22) und zum Abführen von Regeneriermittellösung aus dem Regeneriermittelgefäß (22) in den Ionenaustauscherbehälter (15), das ein Ventil zur Verhinderung einer Rückströmung von Flüssigkeit entgegen der Hauptstromrichtung im Leitungssystem enthält, sowie eine Zylinderkammer mit einem federbelasteten Hubkolben (7) und einem variablen Zylinderkammervolumen (8) aufweist, wobei die Zylinderkammer (5) so im Leitungssystem angeordnet ist, daß mit Hilfe des Kolbenhubes des Hubkolbens (7) einerseits eine gewisse Flüssigkeitsmenge, die dem geförderten Volumen der Regeneriermittellösung entspricht, abgemessen und gefördert werden kann, andererseits den Betriebsablauf der Wasserenthärtungsanlage steuernde Ventile (11, 12) über eine mit dem Hubkolben (7) verbundene Kolbenstange (9) betätigt werden können,
dadurch gekennzeichnet,
daß das nutzbare Hubvolumen bei Verschiebung des Hubkolbens (7) in der Zylinderkammer (5) von einer Extremstellung in die andere größer oder mindestens gleich dem Hohlraumvolumen des Ionenaustauschermaterials einschließlich des im Ionenaustauscherbehälter (15) in Strömungsrichtung vor dem Ionenaustauschermaterial (14) befindlichen Totvolumens ist, und daß in der Regeneriereinrichtung eine Vorrichtung zur automatischen, definierten Verdünnung der aus dem Regeneriermittelgefäß (22) in den Ionenaustauscherbehälter (15) geförderten Regeneriermittellösung vorgesehen ist.

2. Wasserenthärtungsanlage nach Anspruch 1, dadurch gekennzeichnet, daß das nutzbare Hubvolumen größer oder gleich dem Hohlraumvolumen des Ionenaustauschermaterials (14) einschließlich der unterhalb und oberhalb des Ionenaustauschermaterials (14) im Ionenaustauscherbehälter (15) befindlichen Totvolumina ist.

3. Wasserenthärtungsanlage nach Anspruch 1 oder 2, dadurch gekennzeichnet, daß mit der Kolbenstange (9) auch mindestens ein Absperrventil (10) im Leitungssystem (23, 24, 26) zum Abführen von Regeneriermittel aus dem Regeneriermittelgefäß (22) in den Ionenaustauscherbehälter (15) betätigt werden kann.

4. Wasserenthärtungsanlage nach einem der vorhergehenden Ansprüche, dadurch gekennzeichnet, daß die Vorrichtung zur automatischen, definierten Verdünnung des aus dem Regeneriermittelgefäß (22) geförderten Regeneriermittels eine im Zuleitungssystem zum Regeneriermittelgefäß (22) vorgesehene Verzweigung (25) umfaßt, von der einerseits ein in das Regeneriermittelgefäß (22) mündender Leitungsabschnitt (21), andererseits eine am Regeneriermittelgefäß (22) vorbeigeführte Bypassleitung (20) abzweigt, die an ihrem anderen Ende in einer Verschneidungstelle (23) mit einem Leitungsabschnitt (24) des Ableitungssystems aus dem Regeneriermittelgefäß (22) zusammentrifft.

5. Wasserenthärtungsanlage nach Anspruch 4, dadurch gekennzeichnet, daß im Zuleitungssystem (3, 25, 21) zum Regeneriermittelgefäß (22) oder im Ableitungssystem (23, 24) aus dem Regeneriermittelgefäß (22) mindestens ein Drosselorgan (21a) mit veränderbarem Durchflußquerschnitt vorgesehen ist.

6. Wasserenthärtungsanlage nach Anspruch 5, dadurch gekennzeichnet, daß das Drosselorgan (21a) im Leitungsabschnitt (21) zwischen der Verzweigung (25) und dem Regeneriermittelgefäß (22) vorgesehen ist.

7. Wasserenthärtungsanlage nach Anspruch 6, dadurch gekennzeichnet, daß in der Bypassleitung (20) eine Drosselstelle (20a) mit fest vorgegebenem Strömungsquerschnitt vorgesehen ist.

8. Wasserenthärtungsanlage nach Anspruch 5, dadurch gekennzeichnet, daß das Drosselorgan in der Bypassleitung (20) vorgesehen ist.

9. Wasserenthärtungsanlage nach Anspruch 8, dadurch gekennzeichnet, daß im Leitungsabschnitt (21) zwischen der Verzweigung (25) und dem Regeneriermittelgefäß (22) eine Drosselstelle mit fest vorgegebenem Strömungsquerschnitt vorgesehen ist.

10. Wasserenthärtungsanlage nach einem der vorhergehenden Ansprüche, dadurch gekennzeichnet, daß das nutzbare Hubvolumen einstellbar ist, insbesondere durch eine einstellbare Hubwegbegrenzung des Hubkolbens (7).

11. Wasserenthärtungsanlage nach einem der vorhergehenden Ansprüche, dadurch gekennzeichnet, daß die Zylinderkammer (5) über einen Leitungsabschnitt (19') mit dem Ableitungssystem (24, 26) aus dem Regeneriermittelgefäß (22) verbunden ist.

12. Wasserenthärtungsanlage nach Anspruch 11, dadurch gekennzeichnet, daß im Leitungsabschnitt (26) zwischen der Einmündung des Leitungsabschnittes (19') und dem Einlauf in den Ionenaustauscherbehälter (15) eine Drosselstelle (17') mit einem definierten, engen Strömungsquerschnitt vorgesehen ist.

13. Wasserenthärtungsanlage nach einem der Ansprüche 1 bis 10, dadurch gekennzeichnet, daß die Zylinderkammer (5) über einen Leitungsabschnitt (19'') mit dem Zuleitungssystem (3, 25) zum Regeneriermittelgefäß (22) verbunden ist.

14. Wasserenthärtungsanlage nach Anspruch 13, dadurch gekennzeichnet, daß der Leitungsabschnitt (19'') in Strömungsrichtung gesehen vor der Verzweigung (25) in das Zuleitungssystem (3) zum Regeneriermittelgefäß (22) mündet.

15. Wasserenthärtungsanlage nach Anspruch 14, dadurch gekennzeichnet, daß in Strömungsrichtung gesehen vor der Einmündung des Leitungsabschnittes (19'') im Zuleitungssystem (3) ein Rückschlagventil (4) mit definierter, kleiner Undichtheit vorgesehen ist.

16. Wasserenthärtungsanlage nach einem der vorhergehenden Ansprüche, dadurch gekennzeichnet, daß sich die Rohwasserzuleitung zur Anlage aufzweigt in einen Harzbehälterzulauf (13) sowie einen Zulauf zum Regeneriermittelbehälter (22) und eine Verbindungsleitung (20) zur Zylinderkammer (5).

17. Wasserenthärtungsanlage nach einem der vorhergehenden Ansprüche, dadurch gekennzeichnet, daß in Strömungsrichtung sowohl vor als auch nach dem Regeneriermittelbehälter (22) ein Rückschlagventil (4, 29) vorgesehen ist.

18. Wasserenthärtungsanlage nach einem der Ansprüche 1 bis 16, dadurch gekennzeichnet, daß die Anlage nur ein Rückschlagventil (4, 29) aufweist, das vorzugsweise dem Regeneriermittelbehälter (22) vorgeschaltet ist.

19. Wasserenthärtungsanlage nach einem der vorhergehenden Ansprüche, dadurch gekennzeichnet, daß eine Leitung (20) vorgesehen ist, die sowohl Verdünnungswasser zur Zylinderkammer (5) leitet als auch verdünnte Regeneriermittellösung zum Ionenaustauscherbehälter (15).

20. Wasserenthärtungsanlage nach einem der vorhergehenden Ansprüche, dadurch gekennzeichnet, daß im Kolben eine Bohrung (30) vorgesehen ist, durch die konzentrierte Regeneriermittellösung in das Zylinderkammervolumen (8) geleitet wird.

21. Wasserenthärtungsanlage nach Anspruch 20, dadurch gekennzeichnet, daß zwei auf dem Hubkolben (7) fixierte Dichtungsringe (31, 32) die Verbindung oder Trennung von Leitungen (33) und (34) bzw. (35) herstellen, und zwar in Abhängigkeit von der Position, die der Hubkolben (7) in der Zylinderkammer (5) bedingt durch den Füllungsgrad des Zylinderkammervolumens (8) einnimmt.

22. Wasserenthärtungsanlage nach einem der Ansprüche 1 bis 19, dadurch gekennzeichnet, daß die Vermischung der konzentrierten Regeneriermittelsole und des Verdünnungswassers an einer Verscheidungsstelle (23) erfolgt, und diese sich direkt vor dem Zulauf zu dem Zylinderkammervolumen (8) oder im Zylinderkammervolumen (8) befindet.

23. Wasserenthärtungsanlage nach Anspruch 22, dadurch gekennzeichnet, daß lediglich ein auf dem Hubkolben (7) fixierter Dichtungsring (32') vorgesehen ist, der die Verbindung oder Trennung von Leitungen (33) und (34) bzw. (35) herstellt, und zwar in Abhängigkeit von der Position, die der Hubkolben (7) in der Zylinderkammer (5) bedingt durch den Füllungsgrad des Zylinderkammervolumens (8) einnimmt.

## Claims

1. Water softening installation having an ion exchanger material (14), preferentially an ion exchanger container (15) containing ion exchanger resin and with a regeneration device for the automatic regeneration of the ion exchanger material (14) following each removal of softened water out of the ion exchanger container (15), the installation having a vessel (22) with concentrated regeneration agent, in particular salt or salt/brine, a conduit system for introduction of water to the regeneration agent vessel (22) and for draining regeneration agent solution out of the regeneration agent vessel (22) into the ion exchanger container (15), the conduit system having a valve to prevent a return flow of liquid in opposition to the main flow direction in the conduit system, and with a cylinder chamber having a spring loaded piston (7) and a variable cylinder chamber volume (8), wherein the cylinder chamber (5) is disposed in the conduit system in such a fashion that, with the assistance of a piston stroke of the piston (7), a given liquid volume corresponding to the transported volume of regeneration agent solution can be dosed and transported and the valves (11, 12) controlling the operational processing of the water softening installation can be actuated via a piston rod (9) connected to the piston (7),
characterized in that,
the usable stroke volume, during displacement of the piston (7) within the cylinder chamber (5) from one extreme position into the other, is larger or at least equal to the cavity volume of the ion exchanger material including the dead space within the ion exchanger container (15) located upstream of the ion exchanger material (14), and the regeneration device comprises a device for the automatic defined dilution of the regeneration agent solution transported out of the regeneration agent vessel (22) into the ion exchanger container (15).

2. Water softening installation according to claim 1, characterized in that, the usable stroke volume is larger or equal to the cavity volume of the ion exchanger material (14) including the dead spaces below and above the ion exchanger material (14) in the ion exchanger container (15).

3. Water softening installation according to claim 1 or 2, characterized in that, the piston rod (9) can also actuate at least one blocking valve (10) in the conduit system (23, 24, 26) for draining regeneration agent out of the regeneration agent vessel (22) into the ion exchanger container (15).

4. Water softening installation according to one of the preceding claims, characterized in that, the device for automatic defined dilution of the regeneration agent transported out of the regeneration agent vessel (22) includes a branch (25), disposed in the inlet conduit system to the regeneration agent vessel (22), having a conduit section (21) leading into the regeneration agent vessel (22) and a conduit (20) by-passing the regeneration vessel (22) which, at one end, branches-off from the branch (25) and, at its other end, connects at a blending location (23) to a conduit section (24) of the drain system out of the regeneration agent vessel (22).

5. Water softening installation according to claim 4 characterized in that, at least one throttle member (21a) having an adjustable flow cross-section is disposed in the inlet system (3, 25, 21) to the regeneration agent vessel (22) or in the drain system (23, 24) out of the regeneration agent vessel (22).

6. Water softening installation according to claim 5, characterized in that, the throttle member (21a) is disposed in the conduit section (21) between the branch (25) and the regeneration agent vessel (22).

7. Water softening installation according to claim 6, characterized in that, a throttle location (20a) having a fixed flow cross-section is disposed in the by-pass conduit (20).

8. Water softening installation according to claim 5, characterized in that, the throttle member is disposed in the by-pass conduit (20).

9. Water softening installation according to claim 8, characterized in that, a throttle location, having a fixed pre-determined flow cross-section, is disposed in the conduit section (21) between the branch (25) and the regeneration agent vessel (22).

10. Water softening installation according to one of the preceding claims, characterized in that, the usable stroke volume is adjustable, in particular, via an adjustable stroke-path limitation of the piston (7).

11. Water softening installation according to one of the preceding claims, characterized in that, the cylinder chamber (5) is connected to the drain system (24, 26) out of the regeneration agent vessel (22) via a conduit section (19').

12. Water softening installation according to claim 11, characterized in that, a throttle location (17') having a defined, narrow flow-through cross-section is disposed in the conduit section (26) between the mouth of the conduit section (19') and the inlet into the ion exchanger container (15).

13. Water softening installation according to one of the claims 1 to 10, characterized in that, the cylinder chamber (5) is connected to the regeneration agent vessel (22) inlet conduit system (3, 25) via a conduit section (19'').

14. Water softening installation according to claim 13, characterized in that, the conduit section (19'') empties into the regeneration agent vessel (22) inlet system (3) upstream of the branch (25).

15. Water softening installation according to claim 14, characterized in that, a check valve (4) having defined, small leakage is disposed upstream of the feed location of the conduit section (19'') into the inlet conduit system (3).

16. Water softening installation according to one of the preceding claims, characterized in that, the installation's untreated water inlet conduit branches-off into a resin container inlet (13), an inlet to the regeneration agent container (22), and a conduit (20) connecting to the cylinder chamber (5).

17. Water softening installation according to one of the preceding claims, characterized in that, a check valve (4, 29) is disposed both upstream as well as downstream of the regeneration agent container (22).

18. Water softening installation according to one of the claims 1 to 16, characterized in that, the installation comprises only one check valve (4, 29) which is preferentially upstream of the regeneration agent container (22).

19. Water softening installation according to one of the preceding claims, characterized in that, a conduit (20) is provided for introducing both diluting water to the cylinder chamber (5) as well as diluted regeneration agent solution to the ion exchanger container (15).

20. Water softening installation according to one of the preceding claims, characterized in that, a bore (30) is provided in the piston through which the concentrated regeneration agent solution is introduced into the cylinder chamber volume (8).

21. Water softening installation according to claim 20, characterized in that, the connection or separation of conduit (33) to or from conduits (34) and (35) respectively is established with two sealing rings (31, 32) mounted on the piston (7) in dependance on the position which the piston (7) assumes within the cylinder chamber (5) due to the degree of filling of the cylinder chamber volume (8).

22. Water softening installation according to one of the claims 1 to 19, characterized in that, the mixture of concentrated regeneration agent brine and diluting water occurs at a blending location (23) disposed directly upstream of the inlet to the cylinder chamber volume (8) or in the cylinder chamber volume (8).

23. Water softening installation according to claim 22, characterized in that, only one sealing ring (32') is mounted to the piston (7) to effect connection or separation of conduits (33) and (34) or (35) respectively in dependance on the position assumed by the piston (7) within the cylinder chamber (5) caused by the degree of filling of the cylinder chamber volume (8).

## Revendications

1. Installation d'adoucissement de l'eau, comportant un matériau échangeur d'ions (14), de préférence un réservoir (15) de matériau échangeur d'ions contenant une résine échangeuse d'ions, ainsi que, pour la régénération automatique du matériau échangeur d'ions (14) après chaque prélèvement d'eau adoucie hors du récipient (15) de matériau échangeur d'ions, un dispositif de régénération qui présente un réservoir (22) contenant un agent de régénération concentré, en particulier du sel ou une saumure, ainsi que, pour amener de l'eau au réservoir (22) d'agent de régénération et pour transporter dans le réservoir (15) le matériau échangeur d'ions de la solution d'agent de régénération en provenance du réservoir (22) d'agent de régénération, un système de conduites qui présente un clapet de non-retour pour interdire un retour du liquide en sens opposé au flux principal, ainsi qu'une chambre de cylindre avec un piston de foulement (7) contraint par un ressort et d'un volume de chambre de cylindre (8) variable, la chambre de cylindre (5) étant disposée dans le système de conduite de façon qu'à l'aide de la course du piston de refoulement (7), d'une part puisse être mesurée et transportée une certaine quantité de liquide correspondant au volume transporté de la solution d'agent de régénération et que d'autre part des vannes (11, 12), commandant le déroulement de l'exploitation dans l'installation d'adoucissement de l'eau, puissent être manoeuvrées par l'intermédiaire d'une tige de piston (9) reliée au piston de refoulement (7),
caractérisée par le fait
que, lors du coulissement du piston de refoulement (7) dans la chambre de cylindre (5) d'une position extrême à l'autre, le volume refoulé utilie est supérieur ou au moins égal au volume de l'espace creux du matériau échangeur d'ions y compris le volume mort qui se trouve dans le réservoir (15) de matériau échangeur d'ions, en avant du matériau échangeur d'ions (14), dans le sens du flux, et que dans le dispositif de régénération est prévu un appareil pour la dilution automatique, définie, de la solution d'agent de régénération transportée, depuis le réservoir (22) d'agent de régénération, dans le réservoir (15) de matériau échangeur d'ions.

2. Installation d'adoucissement de l'eau selon la revendication 1, caractérisée par le fait que le volume refoulé utile est supérieur ou égal au volume de l'espace creux du matériau échangeur d'ions (14), y compris les volumes morts situés au-dessous et au-dessus du matériau échangeur d'ions (14) dans le réservoir (15) de matériau échangeur d'ions.

3. Installation d'adoucissement de l'eau selon la revendication 1 ou 2, caractérisée par le fait qu'avec la tige de piston (9) peut également être manoeuvrée au moins une vanne d'arrêt (10) dans le système de conduites (23, 24, 26) pour le transport de l'agent de régénération, depuis le réservoir (22) d'agent de régénération, dans le réservoir (15) de matériau échangeur d'ions.

4. Installation d'adoucissement de l'eau selon l'une des revendications précédentes, caractérisée par le fait que l'appareil pour la dilution automatique, définie, de l'agent de régénération transporté depuis le réservoir (22) d'agent de régénération comporte un embranchement (25) qui est prévu dans le système de conduite amenant au réservoir (22) d'agent de régénération et duquel bifurquent d'une part un tronçon de conduite (21) débouchant dans le réservoir (22) d'agent de régénération, d'autre part une conduite de bypass (20) qui bypasse le réservoir (22) d'agent de régénération et qui, à son autre extrémité, en une position d'intersection (23), coïncide avec un tronçon de conduite (24) du système de conduite d'évacuation depuis le réservoir (22) d'agent de régénération.

5. Installation d'adoucissement de l'eau selon la revendication 4, caractérisée par le fait que dans le système de conduite (3, 25, 21) d'amenée au réservoir (22) d'agent de régénération ou dans le système de conduite (23, 24) d'évacuation depuis le réservoir (22) d'agent de régénération est prévu au moins un organe d'étranglement (21a) à section de passage variable.

6. Installation d'adoucissement de l'eau selon la revendication 5, caractérisée par le fait que l'organe d'étranglement (21a) est prévu sur le tronçon de conduite (21) situé entre l'embranchement (25) et le réservoir (22) d'agent de régénération.

7. Installation d'adoucissement de l'eau selon la revendication 6, caractérisée par le fait que sur la conduite de bypass (20) est prévue une position d'étranglement (20a) de section de passage fixe prescrite.

8. Installation d'adoucissement de l'eau selon la revendication 5, caractérisée par le fait que l'organe d'étranglement est prévu sur la conduite de bypass (20).

9. Installation d'adoucissement de l'eau selon la revendication 8, caractérisée par le fait que sur le tronçon de conduite (21) situé entre l'embranchement (25) et le réservoir (22) d'agent de régénération est prévue une position d'étranglement de section de passage fixe prescrite.

10. Installation d'adoucissement de l'eau selon l'une des revendications précédentes, caractérisée par le fait que le volume refoulé utile est réglable, en particulier par une limitation de la course de refoulement réglable du piston de refoulement (7).

11. Installation d'adoucissement de l'eau selon l'une des revendications précédentes, caractérisée par le fait que la chambre de cylindre (5) est reliée, par l'intermédiaire d'un tronçon de conduite (19'), au système (24, 26) de conduite d'évacuation depuis le réservoir d'agent de régénération (22).

12. Installation d'adoucissement de l'eau selon la revendication 11, caractérisée par le fait que sur le tronçon de conduite (26) situé entre l'embouchure du tronçon de conduite (19') et l'entrée dans le réservoir (15) de matériau échangeur d'ions est prévue une position d'étranglement (17') de section de passage étroite, définie.

13. Installation d'adoucissement de l'eau selon l'une des revendications 1 à 10, caractérisée par le fait que la chambre de cylindre (5) est reliée, par l'intermédiaire d'un tronçon de conduite (19''), au système (3, 25) de conduite d'amenée au réservoir (22) d'agent de régénération.

14. Installation d'adoucissement de l'eau selon la revendication 13, caractérisée par le fait que le tronçon de conduite (19'') débouche dans le système (3) de conduite d'amenée au réservoir (22) d'agent de régénération, en avant de l'embranchement (25), vu dans le sens du flux.

15. Installation d'adoucissement de l'eau selon la revendication 14, caractérisée par le fait qu'en avant, vu dans le sens du flux, de l'embouchure du tronçon de conduite (19''), est prévu dans le système de conduite d'amenée (3) un clapet de non-retour (4) présentant une non-étanchéité faible, définie.

16. Installation d'adoucissement de l'eau selon l'une des revendications précédentes, caractérisée par le fait que sur le tronçon de conduite (21) la conduite d'arrivée d'eau brute à l'installation bifurque en une arrivée (13) au réservoir de résine ainsi qu'en une arrivée au réservoir (22) d'agent de régénération et en une conduite de liaison (20) avec la chambre de cylindre (5).

17. Installation d'adoucissement de l'eau selon l'une des revendications précédentes, caractérisée par le fait qu'un clapet de non-retour (4, 29) est prévu dans le sens du flux aussi bien avant qu'après le réservoir (22) d'agent de régénération.

18. Installation d'adoucissement de l'eau selon l'une des revendications 1 à 16, caractérisée par le fait que l'installation ne présente qu'un seul clapet de non-retour (4, 29) qui de préférence est monté en avant du réservoir (22) d'agent de régénération.

19. Installation d'adoucissement de l'eau selon l'une des revendications précédentes, caractérisée par le fait qu'est prévue une conduite (20) qui conduit aussi bien de l'eau de dilution à la chambre de cylindre (5) que de la solution diluée d'agent de régénération au réservoir (15) de matériau échangeur d'ions.

20. Installation d'adoucissement de l'eau selon l'une des revendications précédentes, caractérisée par le fait que dans le piston est prévu un perçage (30) par lequel de la solution concentrée d'agent de régénération passe dans le volume de la chambre de cylindre (8).

21. Installation d'adoucissement de l'eau selon la revendication 20, caractérisée par le fait que deux bagues d'étanchéité (31, 32) réalisent la liaison ou la séparation des conduites (33) et (34) ou (35) et ceci en fonction de la position que prend obligatoirement le piston de refoulement (7) dans la chambre de cylindre (5) du fait du taux de remplissage du volume (8) de la chambre de cylindre.

22. Installation d'adoucissement de l'eau selon l'une des revendications précédentes, caractérisée par le fait que le mélange de la saumure concentrée d'agent de régénération et de l'eau de dilution se fait en une position d'intersection (23) et que celle-ci se trouve directement avant l'arrivée au volume (8) de la chambre de cylindre ou dans le volume (8) de la chambre de cylindre.

23. Installation d'adoucissement de l'eau selon la revendication 22, caractérisée par le fait qu'est prévue une seule bague d'étanchéité (32'), fixée sur le piston de refoulement (7), qui réalise la liaison ou la séparation des conduites (33) et (34) ou (35) et ceci en fonction de la position que prend obligatoirement le piston de refoulement (7) dans la chambre de cylindre (5) du fait du taux de remplissage du volume (8) de la chambre de cylindre.
